# EUROPÄISCHE PATENTANMELDUNG

(11) **EP 2 264 888 A2**
(43) Veröffentlichungstag der Anmeldung: **22.12.2010**
(21) Anmeldenummer: 10164142.1
(22) Anmeldetag: 27.05.2010
(51) Int. Cl.: H02P 9/48

(54) **Anordnung zum Betreiben einer elektrischen Maschine**

(30) Priorität: 18.06.2009 DE 102009027028
(71) Anmelder: Robert Bosch GmbH, 70442 Stuttgart (DE)
(72) Erfinder: Wolf, Gert, 71563 Affalterbach (DE); Reutlinger, Kurt, 70174 Stuttgart (DE)

(57) **Zusammenfassung**

Die Erfindung betrifft eine Anordnung (300) zum Betreiben einer elektrischen Maschine, die an einem Energienetz angeschlossen ist, wobei die Maschine zum Erzeugen eines Magnetfelds mindestens einen Permanentmagneten und mindestens eine Erregerwicklung (176), durch die ein Erregerstrom (178) zu leiten ist, aufweist, wobei durch das erzeugte Magnetfeld in mindestens einem Leiter der Maschine eine Spannung induziert wird, wobei die Anordnung (300) mindestens eine aktive elektronische Schaltungsanordnung (302) aufweist, die dazu ausgebildet ist, die induzierte Spannung zu regeln, falls der Erregerstrom (178) null ist und die induzierte Spannung größer als eine Netzspannung (204) des Energienetzes ist.

## Beschreibung

Die Erfindung betrifft eine Anordnung zum Betreiben einer elektrischen Maschine sowie ein Verfahren zum Betreiben einer elektrischen Maschine.

### Stand der Technik

Elektrische Maschinen, die als Generatoren und/oder Motoren ausgebildet sein können, sowie Schaltungen zur Verbindung derartiger Maschinen mit Netzen zur Energieversorgung sind in verschiedenen Ausführungsformen bekannt.

So wird eine elektrische Maschine mit hybriderregtem Rotor in der Druckschrift DE 10 2007 025 971 A1 vorgestellt.

Ein elektrisches Spannungsversorgungssystem mit einer hybriderregten Maschine, die Phasenwicklungen umfasst, ist in der Druckschrift DE 198 38 296 A1 beschrieben. Ein darin vorgestelltes Verfahren ist zum Verbinden zweier Bordnetze mit der hybriderregten Maschine geeignet, da der magnetische Fluss in der hybriderregten Maschine vollständig in geblechten Flussbereichen geführt werden kann. Dadurch bilden sich deutlich weniger Wirbelstromverluste als es bspw. bei einer Klauenpolmaschine der Fall ist.

Die Druckschrift DE 199 03 426 A1 betrifft eine Vorrichtung und ein Verfahren zur Regelung eines Generators mit zugeordnetem Spannungswandler, der als Hochsetzsteller ausgebildet ist.

Eine Regelstruktur, insbesondere zur Bestimmung der Lage einer rotierenden Komponente einer sogenannten Klauenpolmaschine, wird in der Druckschrift DE 100 36 869 A1 vorgestellt.

Ein Verfahren zur Regelung einer elektrischen Maschine mit einer Erregerwicklung sowie einer Ständerwicklung ist Gegenstand der Druckschrift DE 100 36 099 A1. Dieses Verfahren kann auch auf hybriderregte Generatoren übertragen werden und ermöglicht zudem den Betrieb der Maschine als Motor. Hierdurch lassen sich Zusatzfunktionen wie eine Startfunktion für den Verbrennungsmotor, eine elektrische Leistungsverstärkung sowie ein Fahren mit elektrischem Antrieb realisieren.

Das Verfahren aus der Druckschrift DE 100 27 859 A1 betrifft die Erzeugung einer elektrischen Leistung bei Betrieb einer hybriderregten elektrischen Maschine, die eine Erregerwicklung sowie eine Ständerwicklung umfasst. Dieses zur Steigerung des Wirkungsgrads geeignete Verfahren ist mit einem Hochsetzsteller oder einem Vollumrichter, der mit der Maschine verbunden ist, durchführbar.

### Offenbarung der Erfindung

Vor diesem Hintergrund werden eine Anordnung und ein Verfahren mit den Merkmalen der unabhängigen Patentansprüche vorgestellt.

Mit der Erfindung wird u. a. eine als Wechselstromgenerator ausgebildete elektrische Maschine mit einer Umrichterelektronik als Schaltungsanordnung bereitgestellt. Weiterhin ist vorgesehen, für einen hybriderregten Wechselstromgenerator für ein Kraftfahrzeug unterschiedliche Anschlusskonzepte an ein Gleichstrom- bzw. DC-Bordnetz umzusetzen. Dabei ergeben sich unterschiedliche Aufbauten für elektronische Schaltungsanordnungen und somit für die Elektronik der elektrischen Maschine sowie unterschiedliche Betriebsarten für den Wechselstromgenerator.

Durch die unterschiedlichen Aufbauten der elektronischen Schaltungsanordnung sind Leistungssteigerungen möglich. Weiterhin kann eine als hybriderregter Wechselstromgenerator ausgebildete hybriderregte elektrische Maschine durch einen elektronisch gesteuerten Wechselrichter als elektronische Schaltungsanordnung auch als Motor eingesetzt werden und dadurch eine Startfunktion für das Kraftfahrzeug unterstützen, so dass die beschriebene Maschine auch als Motorgenerator benutzt werden kann.

Es ist weiterhin vorgesehen, dass zur möglichen Realisierung der Erfindung unterschiedliche Polwechselmaschinen mit unterschiedlichen Pulswechselrichtern als elektronische Schaltungsanordnungen kombiniert werden können. Dadurch sind verschiedene Verfahren zur Kontrolle und somit zur Regelung und/oder Steuerung der elektrischen Maschine möglich.

Für eine elektrische Maschine mit Hybriderregung, d. h. einer elektrischen Erregung sowie einer Erregung durch Permanentmagnete, kann für den Fall einer elektrischen Erregung gleich 0, wenn der Erregerstrom in der Rotorwicklung oder Erregerwicklung 0 A beträgt, und einer Spannung größer der Sollspannung bzw. der Bordnetzspannung die Spannungsregelung durch einen aktiven Gleichrichter oder einen PWR (Pulswechselrichter) als mindestens eine elektronische Schaltungsanordnung erfolgen.

Durch diese Maßnahme wird bei einer Unterbrechung im Erregersystem, mit dem ein Erregerstrom bereitgestellt wird, z. B. an einem Lebensdauerende der zur Stromübertragung vorgesehenen Bürsten, gewährleistet, dass keine Überspannung im Bordnetz entsteht.

Wenn der Erregerstrom gleich Null ist und die induzierte Spannung größer als die Sollspannung (Bordnetzspannung) ist, erzeugen die Permanentmagnete typischerweise ein Magnetfeld, das hinreichend groß ist, eine elektrische Spannung in den Ständerspulen der Maschine zu erzeugen. Bei höheren Drehzahlen kann diese induzierte Spannung in der Maschine erhöhte Werte erreichen.

Eine Regelung der Netzspannung bzw. der Ausgangsspannung eines Generators als elektrische Maschine ist im Rahmen der Erfindung dadurch gegeben, dass über einen negativen Erregerstrom der Wirkung der Permanentmagnete entgegen gewirkt werden kann.

Wird auf eine Gegenerregung, d. h. einen negativen Erregerstrom, verzichtet, besteht bei vorhandener schaltbarer Elektronik als elektronische Schaltungsanordnung im Leistungspfad des Generators die Möglichkeit, die Spannungsregelung über diese zu realisieren.

Die Erfindung kann durch unterschiedliche Kombinationen von den diversen steuerbaren Elektronikmodulen als Komponenten der elektronischen Schaltungsanordnung mit der hybriderregten Maschine umgesetzt werden.

Ist eine steuerbare Elektronik bzw. ein steuerbares Elektronikmodul im Leistungspfad vorhanden, kann diese bzw. dieses für den Fall kleiner Abgabeleistungen genutzt werden. Bei kleinen Leistungen und höheren Drehzahlen ist ansonsten ein negativer Erregerstrom erforderlich.

Mit der Erfindung ergibt sich außerdem, dass bei vorhandener Leistungselektronik der Regler und die Ansteuerung für die Erregerwicklung einfacher aufgebaut werden können. Dies ist möglich, da die Erregung nur für eine Stromrichtung von 0 A bis zu einem maximalen Wert des Erregerstroms ausgelegt werden muss. Eine Stromumkehr ist hierbei nicht mehr erforderlich.

Die vorgestellte Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen einzelner Komponenten der Anordnung oder der gesamten Anordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt in schematischer Darstellung eine erste Ausführungsform einer als Generator ausgebildeten elektrischen Maschine mit einem Klauenpolrotor.
Figur 2 zeigt in schematischer Darstellung einen Längsschnitt durch eine zweite Ausführungsform einer als Wechselstromgenerator ausgebildeten elektrischen Maschine für ein Kraftfahrzeug mit einem hybriderregten Rotor in Polwechselanordnung.
Figur 3 zeigt in schematischer Darstellung ein Schaltbild für eine erste Ausführungsform einer erfindungsgemäßen Anordnung mit einer Brückenschaltung eines 3-phasigen Stators einer elektrischen Maschine in Dreieckschaltung, eine Sternschaltung ist ebenfalls möglich.
Figur 4 zeigt in schematischer Darstellung ein Schaltbild für eine zweite Ausführungsform einer erfindungsgemäßen Anordnung mit einer Brückenschaltung eines 5-phasigen Stators einer elektrischen Maschine in einer Schaltung als fünfzackiger Stern, eine Schaltung als Ring ist ebenfalls möglich.
Figur 5 zeigt in schematischer Darstellung ein Schaltbild für eine dritte Ausführungsform einer erfindungsgemäßen Anordnung mit einer Brückenschaltung eines 7-phasigen Stators einer elektrischen Maschine in einer Schaltung als siebenzackiger Stern, eine Schaltung als Ring ist ebenfalls möglich.
Figur 6 zeigt in schematischer Darstellung einen Querschnitt durch den magnetischen Aktivteil einer dritten Ausführungsform einer als Generator ausgebildeten elektrischen Maschine.
Figur 7 zeigt in schematischer Darstellung eine Ansicht der in Figur 6 gezeigten elektrischen Maschine bei abgenommener Elektronik und abgenommenem Lagerschild.
Figur 8 zeigt in schematischer Darstellung eine vierte Ausführungsform einer erfindungsgemäßen Anordnung zum Betreiben einer elektrischen Maschine.
Figur 9 zeigt in schematischer Darstellung eine fünfte Ausführungsform einer erfindungsgemäßen Anordnung zum Betreiben einer elektrischen Maschine.
Figur 10 zeigt in schematischer Darstellung ein erstes Diagramm, in der verschiedene Regelbereiche eines Betriebs einer elektrischen Maschine dargestellt sind.
Figur 11 zeigt in schematischer Darstellung eine sechste Ausführungsform für eine Anordnung zum Betreiben einer elektrischen Maschine.
Figur 12 zeigt in schematischer Darstellung eine siebte Ausführungsform einer Anordnung zum Betreiben einer elektrischen Maschine.
Figur 13 zeigt in schematischer Darstellung ein zweites Diagramm mit Regelbereichen zum Betrieb einer elektrischen Maschine.
Figur 14 zeigt in schematischer Darstellung ein drittes Diagramm mit Regelbereichen zum Betreiben einer elektrischen Maschine.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

In Kraftfahrzeugen werden als elektrische Maschinen Wechselstromgeneratoren eingesetzt, die als sogenannte Klauenpolgeneratoren ausgebildet sein können. Bei einem Klauenpolgenerator ist die Erregerwicklung in dem Rotor zylindrisch um den Kern angeordnet.

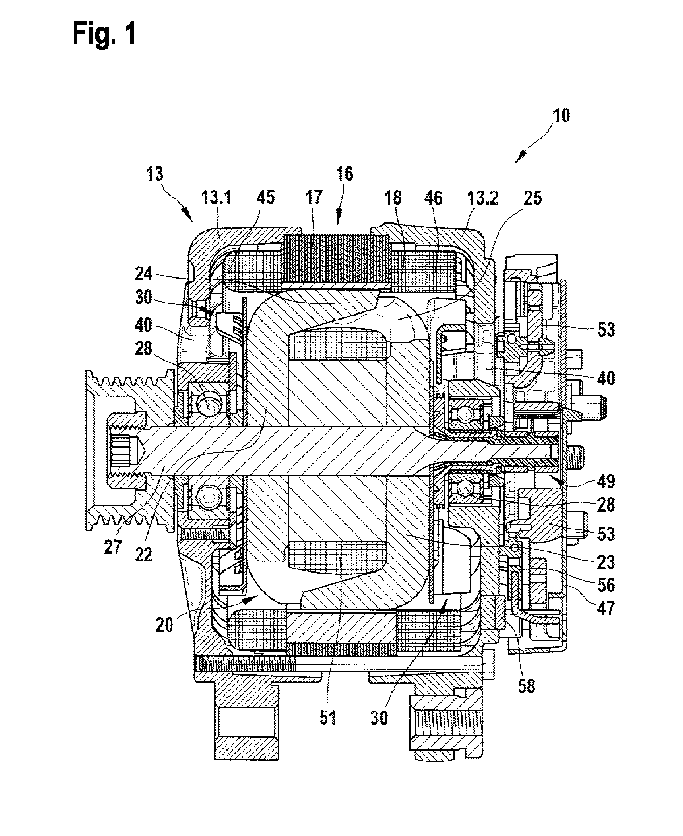

In Fig. 1 ist ein derartiger Klauenpolgenerator als erste Ausführungsform einer elektrischen Maschine 10 für ein Kraftfahrzeug in schematischer Schnittdarstellung gezeigt.

Dieser Klauenpolgenerator weist ein Gehäuse 13 mit zwei Lagerschilden 13.1, 13.2 sowie einen Stator 16 bzw. Ständer mit einem Statorblechpaket 17 und einer Statorwicklung 18 auf.

Ein Rotor 20 umfasst hier u. a. zwei Klauenpolplatinen 22, 23, an deren Außenumfang jeweils in axialer Richtung orientierte Klauenpolfinger 24, 25 angeordnet sind. Beide Klauenpolplatinen 22, 23 sind im Rotor 20 derart angeordnet, dass sich die in axialer Richtung orientierten Klauenpolfinger 24, 25 am Umfang des Rotors 20 einander als magnetische Nord- und Südpole abwechseln. Zwischen den gegensinnig magnetisierten Klauenpolfingern 24, 25 sind Klauenpolzwischenräume angeordnet. Die Klauenpolfinger 24, 25 sind zu ihren freien Enden verjüngt, weshalb die Klauenpolfinger 24, 25 zu einer Welle 27 der Maschine 10 leicht schräg verlaufen.

Für die Maschine 10, die die Funktion eines Generators ausführt, können auf unterschiedliche Arten zusätzlich Magnete im Rotor 20 integriert werden. Die Magnete werden dabei zwischen den Klauenpolfingern 24, 25 eingesetzt und sind zur Streuflusskompensation ausgebildet.

Die Welle 27 der gezeigten Maschine 10 ist in zwei Wälzlagern 28 drehbar gelagert. Ferner sind in Figur 1 zwei Lüfter 30, Nuten 40, Wicklungsüberhänge 45, 46, die kühlluftdurchlässig sind, eine Schutzkappe 47, eine Schleifringbaugruppe 49, ein Wickelkopf 51, zwei Kühlkörper 53, eine Anschlussplatte 56 und eine Minusdiode 58 gezeigt.

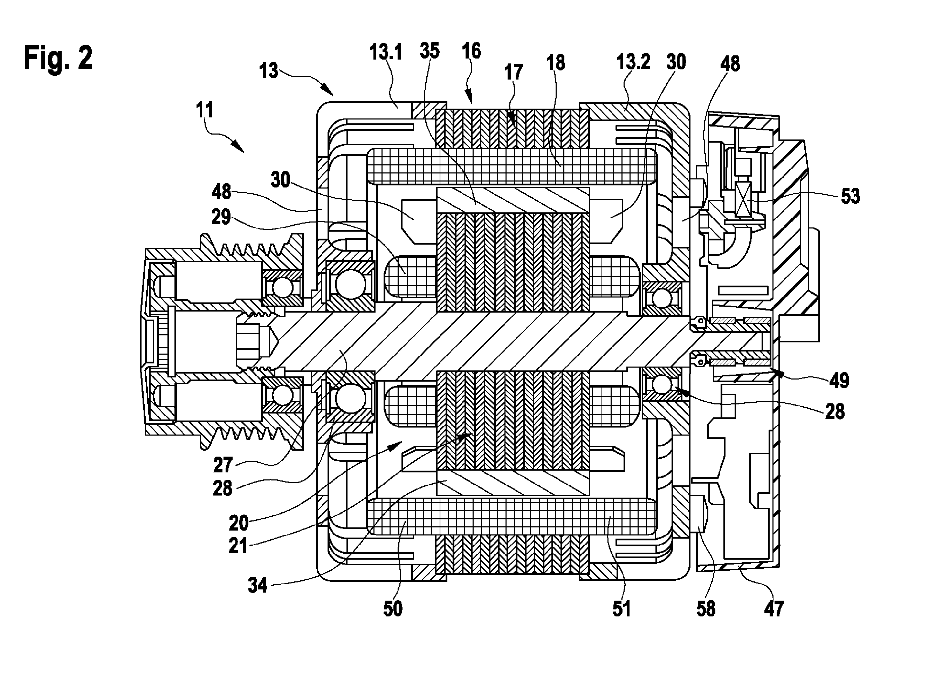

In Fig. 2 ist eine weitere Ausgestaltung einer als Wechselstromgenerator ausgebildeten elektrischen Maschine 11 für ein Kraftfahrzeug in schematischer Schnittdarstellung gezeigt. Diese Maschine 11 weist u. a. ein zweiteiliges Gehäuse 13 auf, das aus einem ersten Lagerschild 13.1 und einem zweiten Lagerschild 13.2 gebildet ist. Zwischen den Lageschilden 13.1, 13.2 ist ein Stator 16 mit einem kreisringförmigen Statorblechpaket 17 aufgenommen. Das Statorblechpaket 17 weist nach innen offene und sich axial erstreckende Nuten 19 mit darin angeordneten Statorwicklungen 18 auf. Der ringförmige Stator 16 umgibt mit einer radial nach innen gerichteten Oberfläche einen elektromagnetischhybriderregten Rotor 20, der im Stator 16 drehbar gelagert ist. Der Rotor 20 und der Stator 16 wirken über einen Arbeitsluftspalt zusammen.

Der Rotor 20 weist über seinen Umfang in einer vorgegebenen Folge mehrere magnetische Nordpole N und Südpole S auf, die durch polbildende Permanentmagnete 34, 35 sowie durch eine bestromte Erregerwicklung 29 gebildet sind. Die Polzahl des Rotors 20 kann in Abhängigkeit von der Stärke und Richtung eines Erregerstroms Iₑᵣᵣ, der durch die Erregerwicklung 29 fließt, gesteuert werden. Der Rotor 20 ist aus einem magnetisch leitfähigen Körper, der hier als Rotorblechpaket 21 ausgebildet ist, aufgebaut. Das Rotorblechpaket 21 ist typischerweise in Achsrichtung laminiert und weist eine Blechstärke zwischen 0,1 mm und 2,0 mm auf, da die Widerstandsfähigkeit des Blechpakets 21 bei einer Blechstärke kleiner 0,1 mm gegen Fliehkräfte zu gering ist. Bei einer Blechstärke größer 2,0 mm ist die Verringerung der Wirbelstromverluste auf der Außenfläche des Rotors 20 nicht mehr ausreichend, so dass die im Rotor 20 eingebauten Permanentmagnete 34, 35 ggf. geschädigt, bspw. entmagnetisiert, werden können.

Die axiale Länge des Rotorblechpakets 21 des Rotors 20 entspricht üblicherweise der axialen Länge des kreisringförmigen Statorblechpakets 17 und ist für einen Toleranzausgleich bis zu 2 mm länger oder auch kürzer als das kreisfingförmige Statorblechpaket 17 vorgesehen. Das Rotorblechpaket 21 wird hier durch Schweißnähte zusammengehalten. Statt Schweißungen können alternativ auch Nieten oder Knöpfungen zur Befestigung eingesetzt werden. Alternativ sind auch Schraubungen möglich, wobei die Schrauben dann gleichzeitig die Lüfter 30 fixieren. Die Erregerwicklung 29 ist als Durchmesserspule ausgebildet und liegt in ausgesparten Nuten 40, die aus dem Rotorblechpaket 21 ausgestanzt sind. Die Erregerwicklung 29 kann z. B. als sogenannte Flyerwicklung (Doppelflyer) direkt in die Nuten 40 des Rotorblechpakets 21 eingewickelt werden. Die Permanentmagnete werden in die ausgesparten Bereiche, hier ausgestanzte Taschen des Rotorblechpakets 21, eingeschoben. Hierdurch werden die Fliehkräfte durch die geometrische Form der Taschen kompensiert und dadurch ein sicherer Halt der Permanentmagnete 34, 35 auf dem Rotor 20 gewährleistet. Das verwendete Magnetmaterial weist eine Remanenzinduktion größer 1 T auf. Diese magnetische Eigenschaft wird bspw. von Permanentmagneten aus seltenen Erden erfüllt. Die Permanentmagnete 34, 35 sind in den Rotor 20 symmetrisch verteilt eingebaut und erzeugen ein im wesentlichen radiales Magnetfeld. Dieses Magnetfeld tritt vom Rotor 20 über den Luftspalt in das Statorblechpaket 17 ein und bildet somit bei Drehung des Rotors 20 innerhalb der Statorwicklungen 18 eine induzierte Spannung.

Der Rotor 20 ist über eine Welle 27 und je einem rotorseitig angeordneten Wälzlager 28 in den jeweiligen Lagerschilden 13.1, 13.2 drehbar gelagert. Außerdem weist der Rotor 20 zwei axiale Stirnflächen auf, an denen jeweils ein Lüfter 30 befestigt ist. Jeder Lüfter 30 besteht im wesentlichen aus einem platten- bzw. scheibenförmigen Abschnitt, von dem ausgehend Lüfterschaufeln angeordnet sind. Die Lüfter 30 sind dazu ausgebildet, über Öffnungen 48 in den Lagerschilden 13.1, 13.2 einen Luftaustausch zwischen der Außenseite und dem Innenraum der elektrischen Maschine 11 zu ermöglichen. Dazu sind die Öffnungen 48 an den axialen Enden der Lagerschilde 13.1, 13.2 angeordnet, über die mittels der Lüfter 30 Kühlluft in den Innenraum der elektrischen Maschine 11 eingesaugt wird. Diese Kühlluft wird durch die Rotation der Lüfter 30 radial nach außen beschleunigt, so dass sie durch kühlluftdurchlässige Wickelköpfe 50, 51 auf der Antriebsseite und der Elektronikseite, die mindestens eine elektronische Schaltungsanordnung umfassen kann, hindurchtreten kann. Durch diesen Effekt werden die Wickelköpfe 50, 51 gekühlt. Die Kühlluft strömt nach dem Hindurchtreten durch die Wickelköpfe 50, 51 bzw. nach dem Umströmen dieser Wickelköpfe 50, 51 durch hier nicht dargestellte Öffnungen radial nach außen. Auf der rechten Seite der Maschine 10 ist eine Schutzkappe 47 angeordnet, die die einzelnen Bauteile vor Umgebungseinflüssen schützt. Mit der Schutzkappe 47 wird bspw. eine Schleifringbaugruppe 49 abgedeckt, die eine Erregerwicklung 29 mit dem Erregerstrom Iₑᵣᵣ versorgt. Um diese Schleifringbaugruppe 49 herum ist ein als Pluskühlkörper wirkender Kühlkörper 53 angeordnet, an dem mehrere Plusdioden montiert sind. Zwischen dem Lagerschild 13.2 und dem Kühlkörper 53 ist eine Anschlussplatte angeordnet, die eine am Lagerschild 13.2 befestigte Minusdioden 58 und in dieser Darstellung nicht gezeigte Plusdioden im Kühlkörper 53 in Form einer Brückenschaltung miteinander verbindet. Demnach wirkt der Lagerschild 13.2 hier als sogenannter Minuskühlkörper.

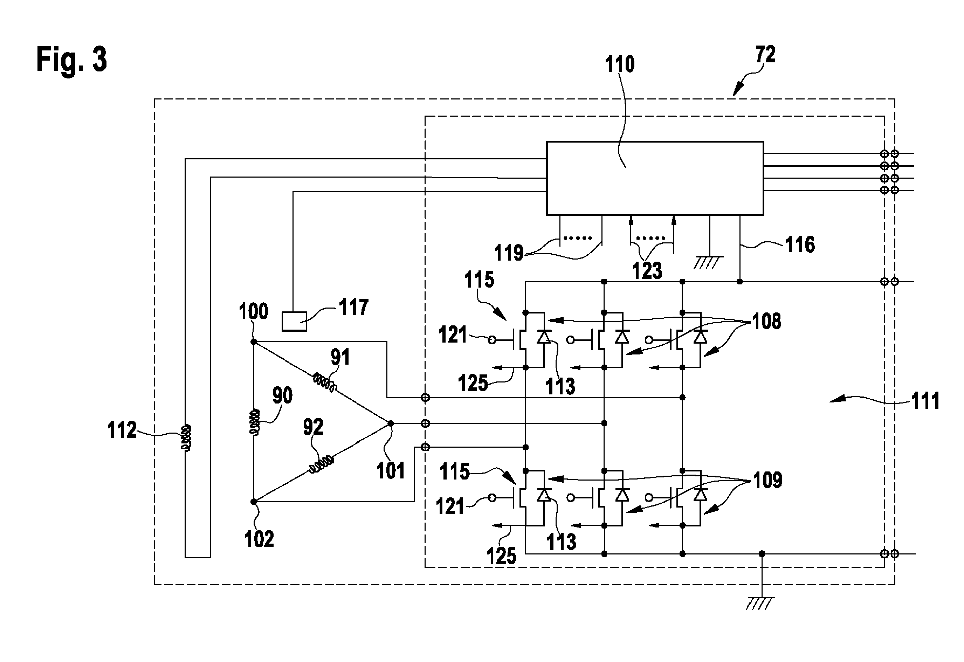

In Figur 3 ist ein Schaltbild mit Komponenten einer als Wechselstromgenerator ausgebildeten dritten Ausführungsform einer elektrischen Maschine 72 mit drei phasenbildenden Wicklungssträngen 90, 91, 92 als Leiter, in denen bei Betrieb der Maschine 72 eine Spannung induziert wird, schematisch dargestellt. Die Wicklungsstränge 90, 91, 92 bilden eine Ständerwicklung und sind in einer Grundschaltung als Dreieck verschaltet, wobei die verschalteten Wicklungsstränge 90, 91, 92 in den Ecken 100, 101, 102 des Dreiecks einen Winkel von ca. 60° einschließen. An Verschaltungspunkten, die an den Ecken 100, 101, 102 des Dreiecks angeordnet sind, ist eine als Gleichrichter/Wechselrichterbrückenschaltung ausgebildete Brückenschaltung 111 als elektronische Schaltungsanordnung angeschlossen.

Bei der Ständerwicklung ist im Detail ein erster Wicklungsteilstrang 90 an dem Verschaltungspunkt der ersten Ecke 100 mit einem zweiten Wicklungsteilstrang 91 verbunden. Der zweite Wicklungsstrang 91 ist an seinem gegenüberliegenden Ende an dem Verschaltungspunkt der zweiten Ecke 101 mit einem dritten Wicklungsstrang 92 verbunden. Der dritte Wicklungsstrang 92 ist an seinem gegenüberliegenden Ende am Verschaltungspunkt der dritten Ecke 102 mit dem ersten Wicklungsstrang 90 verbunden. Die genannten Verschaltungspunkte sind in der beschriebenen Ausführungsform axial auf oder neben einem elektronikseitigen Wickelkopf der Maschine 72 angeordnet, um möglichst kurze Verschaltungswege zu realisieren. Hierzu sind die jeweils zu verschaltenden Anschlussdrähte der Wicklungsstränge 90, 91, 92 eines Verschaltungspunkts einer Ecke 100, 101, 102 zugeordnet und durch Nuten des Ständers bzw. Stators, die in Umfangsrichtung direkt benachbart sind, geführt. Alternativ kann die Ständerwicklung auch in einer Grundschaltung als Stern ausgeführt werden.

Die Verschaltungspunkte der Wicklungsstränge 90, 91, 92 sind mit der separat gesteuerten Brückenschaltung 111, die auch als Brückenwechselrichter-Brückengleichrichter bezeichnet werden kann und zumindest drei Lowsideschalter 108 und zumindest drei Highsideschalter 109 umfasst, verbunden. Die Anzahl der Lowsideschalter 108 entspricht der Anzahl der Highsideschalter 109 sowie der Anzahl der phasenbildenden Wicklungsstränge 90, 91, 92. Die Lowsideschalter 108 und Highsideschalter 109 umfassen hier jeweils eine Diode 113 und ein Schaltbauteil 115, das als MOS (Metalloxidhalbleiter)-Transistor, Bipolartransistor, IGPT (Isolier-Gate-Bipolartransistor) oder einem ähnlichem Halbleiter-Bauteil ausgebildet ist. Bei einer Verwendung von Isolier-Bipolartransistoren (IGBT) sind als Flächendioden ausgebildete Dioden 113 der Highsideschalter 109 und Lowsideschalter 108 jeweils parallel verbunden, so dass die Gleichstromfließrichtungen der Dioden 113 jeweils gegen die Gleichstromfließrichtungen der Schaltbauteile 115 umgekehrt sind. Für Transistoren als Komponenten der Schaltbauteile 115 der Highsideschalter 109 und Lowsideschalter 108 werden hier Leistungstransistoren, deren Träger Elektronen sind, verwendet, da diese Widerstandsverluste und Kosten reduzieren. Typischerweise werden n-Kanal MOS-Transistoren in MOS-Transistoren, npn-Transistoren in Bipolartransistoren und isolierte Gate-npn-Transistoren in Isolier-Bipolartransistoren genutzt.

Gleichspannungsseitig ist zu der Brückenschaltung 111 ein Steuergerät 110, das eine elektronische Schaltungsanordnung umfasst, parallel geschaltet, das durch Beeinflussung des Erregerstroms, der durch die Erregerwicklung 112 fließt, die Spannung der Maschine 72 regelt. Die Erregerwicklung 112 sowie nicht gezeigte Permanentmagnete sind in einem drehbaren Rotor angeordnet und erzeugen ein Magnetfeld, das in den Wicklungssträngen 90, 91, 92 einer Spannung induziert. Das Steuergerät 110 kann zusätzlich eine Verbindung zur Brückenschaltung 111 aufweisen, über die die Frequenz der Wechselspannung, die in den phasenbildenden Wicklungssträngen 90, 91, 92 induziert wird, ermittelt wird. Daraus wird die aktuelle Drehzahl der Maschine 72 bestimmt. Ergänzend können Betriebsparameter der Wicklungsstränge 90, 91, 92 über einen Sensor 117 ermittelt werden.

Das Steuergerät 110 ist weiterhin zum Empfang eines Rotorpositionssignals und von Signalen von Kommunikationsanschlüssen ausgebildet. Es ist auch dazu vorgesehen, an sechs Ausgängen 119, die mit sechs Gate-Anschlüssen 121 der Schaltbauteile 115 verbunden sind, betriebsbegleitend Gatespannungen VG1-VG6 für die jeweiligen Schaltbauteile 115 zu erzeugen. Hierzu sind sechs Eingänge 123 des Steuergeräts 111 mit sechs Spannungsausgängen 125 der Schaltbauteile 115 verbunden. Basierend auf den an den Eingängen 123 empfangenen Signalen der Schaltbauteile 115 werden die vorgesehenen Gatespannungen VG1-VG6, mit denen die Schaltbauteile 115 über die Gate-Anschlüsse 121 versorgt werden, bereitgestellt, um jeweils einen Ein- sowie Auszustand der Schaltbauteile 115 schaltbar zu steuern.

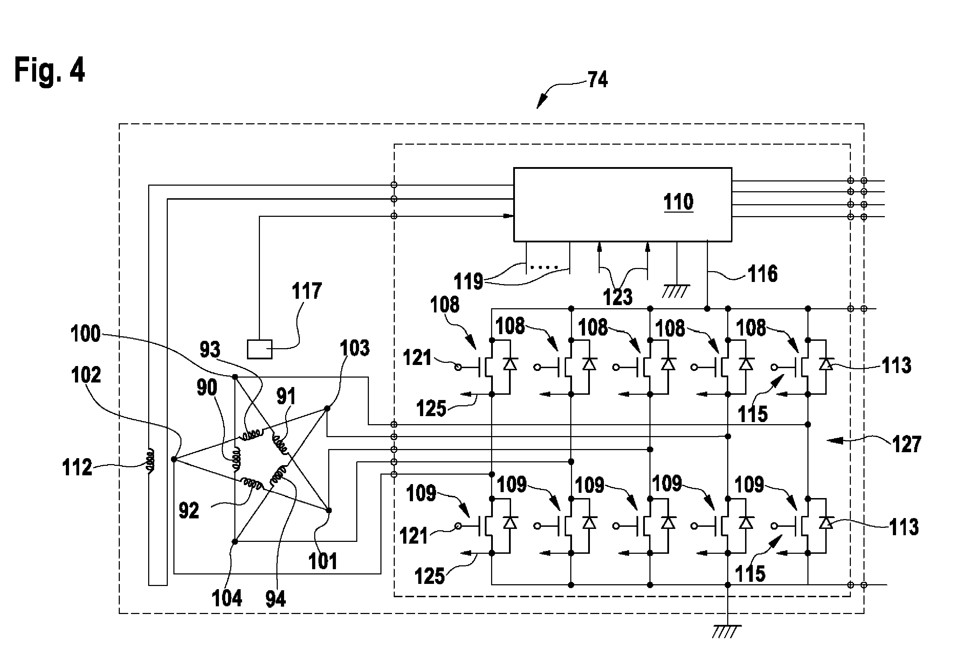

In Figur 4 ist ein weiteres Schaltbild einer als Wechselstromgenerator ausgebildeten elektrischen Maschine 74 mit fünf phasenbildenden Wicklungssträngen 90, 91, 92, 93, 94 schematisch dargestellt. Die Gesamtheit aller Wicklungsstränge 90, 91, 92, 93, 94 bildet eine Ständerwicklung. Die fünf phasenbildenden Wicklungsstränge 90, 91, 92, 93, 94 sind zu einer Grundschaltung als fünfzackiger Stern (Drudenfuß) verschaltet, wobei die in den Zacken des Sterns verschalteten Wicklungsstränge 90, 91, 92, 93, 94 einen Winkel von ca. 36° einschließen. An Verschaltungspunkten, die an den als Zacken ausgebildeten Ecken 100, 101, 102, 103, 104 des fünfzackigen Sterns angeordnet sind, ist eine Gleichrichterbrückenschaltung 129 angeschlossen. In der gezeigten Ausführungsform ist ein erster Wicklungsteilstrang 90 am Verschaltungspunkt der ersten Ecke 100 mit einem zweiten Wicklungsteilstrang 91 verbunden. Der zweite Wicklungsstrang 91 ist an seinem gegenüberliegenden Ende am Verschaltungspunkt der zweiten Ecke 101 mit einem dritten Wicklungsstrang 92 verbunden, der wiederum an seinem gegenüberliegenden Ende am Verschaltungspunkt der dritten Ecke 102 mit einem vierten Wicklungsstrang 93 verbunden ist. Entsprechend ist der vierte Wicklungsteilstrang 93 an seinem gegenüberliegenden Ende am Verschaltungspunkt der vierten Ecke 103 mit einem fünften Wicklungsstrang 94 verbunden. Der fünfte Wicklungsstrang 94 ist an seinem gegenüberliegenden Ende am Verschaltungspunkt der fünften Ecke 104 mit dem ersten Wicklungsstrang 90 verbunden. Bei Betrieb der elektrischen Maschine 74, drehen sich die Erregerwicklungen 112 und nicht gezeigte Permanentmagnete relativ zu den Wicklungssträngen 90, 91, 92, 93, 94, die als Leiter der Maschine 74 ausgebildet sind, so dass in diesen Leitern eine Spannung induziert wird.

Die Verschaltungspunkte befinden sich typischerweise axial auf oder neben einem elektronikseitigen Wickelkopf, um möglichst kurze Verschaltungswege zu realisieren. Hierzu sind die jeweils zu verschaltenden Anschlussdrähte der Wicklungsstränge 90, 91, 92, 93, 94 eines Verschaltungspunkts an einer Ecke 100, 101, 102, 103, 104 durch Nuten eines Stators der Maschine 74, die in Umfangsrichtung direkt benachbart sind, geführt. Außerdem sind die Verschaltungspunkte der Wicklungsstränge 90, 91, 92, 93, 94 mit einer separaten als Gleichrichter/Wechselrichterbrückenschaltung ausgebildete Brückenschaltung 127 als elektronische Schaltungsanordnung verbunden, die zumindest fünf Lowsideschalter 108 und zumindest fünf Highsideschalter 109 umfasst.

Der Anordnung aus Figur 3 entsprechend ist die aktuelle Drehzahl der Maschine 74 über ein Steuergerät 110 zu ermitteln. Im Unterschied zu der in Figur 3 gezeigten Darstellung sind insgesamt zehn Ausgänge 119 des Steuergeräts 110 mit Gate-Anschlüssen 121 der insgesamt zehn Schaltbauteile 115 der fünf Lowsideschalter 108 und fünf Highsideschalter 109 verbunden. Insgesamt zehn Spannungsausgänge 125 der zehn Schaltbauteile 115 sind ebenfalls mit zehn Eingängen 123 des Steuergeräts 110 verbunden. Durch diese Verschaltung ist es möglich, dass das Steuergerät 110 allen Lowsideschaltern 108 sowie Highsideschaltern 109 betriebsbegleitend jeweils geeignete Gatespannungen VG1-VG10 bereitstellen kann.

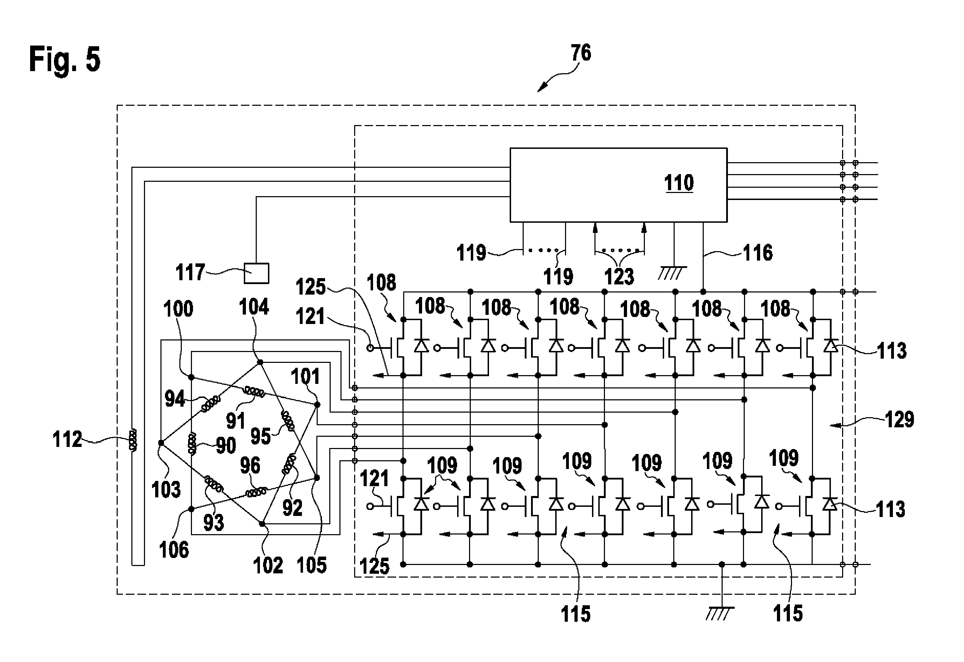

Figur 5 zeigt in schematischer Darstellung eine weitere Ausführungsform einer elektrischen Maschine 76 mit sieben phasenbildenden Wicklungssträngen 90, 91, 92, 93, 94, 95, 96 als Leiter der Maschine 76, in denen bei Betrieb der Maschine 76 durch ein sich drehendes Magnetfeld, das durch einen Erregerstrom, der durch eine Erregerwicklung 112 fließt, eine Spannung induziert wird. Diese elektrische Maschine 76 umfasst im Unterschied zu den anhand der Figuren 3 und 4 bereits vorgestellten Maschinen 72, 74 als Komponente einer Brückenschaltung 129 zumindest sieben Lowsideschalter 108, die jeweils eine Diode 113 und ein Schaltbauteil 115 mit einem Gate-Anschluss 121 und einem Spannungsausgang 125 aufweisen. Außerdem umfasst diese Brückenschaltung 129 als elektronische Schaltungsanordnung hier zumindest sieben Highsideschalter 109, die ebenfalls jeweils eine Diode 113 und ein Schaltbauteil 115 umfassen. Die insgesamt vierzehn Gate-Anschlüsse 121 sind mit ebenfalls vierzehn Ausgängen 119 eines Steuergeräts 110 verbunden. Die vierzehn Spannungsausgänge 125 der Schaltbauteile 115 sind mit ebenfalls vierzehn Eingängen 123 des Steuergeräts 110 verbunden. Prinzipiell ist die in Figur 5 schematisch dargestellte Ausführungsform der elektrischen Maschine 76 genauso wie die bereits anhand der Figuren 3 und 4 beschriebenen Maschinen 72, 74 zu betreiben.

Es ist zur Regelung des Betriebs der Maschine 72, 74, 76 auch möglich, die Erregerwicklung 112 mit Hilfe von vier Endstufen, die zu einer H-Brückenschaltung verbunden werden, anzusteuern, so dass in die Erregerwicklung 112 auch negative Erregerströme Iₑᵣᵣ eingeprägt werden können. Dies ergibt Vorteile in Bezug auf das Leistungsabregelungsverhalten und auf die Regelgeschwindigkeit der Maschine 72, 74, 76, da zum schnellen Entregeln auch negative Spannungen an die Erregerwicklung 112 angelegt werden können. Die genannte H-Brücke ist üblicherweise im Gehäuse des Steuergeräts 110 angeordnet.

In der Regel können auch andere Phasenzahlen und Verschaltungsarten in entsprechender Weise realisiert werden. Bspw. können hier dreiphasige Anordnungen in Stern- oder Dreieckschaltung, fünfphasige Systeme in Stern- oder Ringschaltung, siebenphasige Systeme in Stern- oder Ringschaltung sowie sechsphasige Systeme in Doppelstern- oder Doppeldreieckschaltung vorgesehen sein.

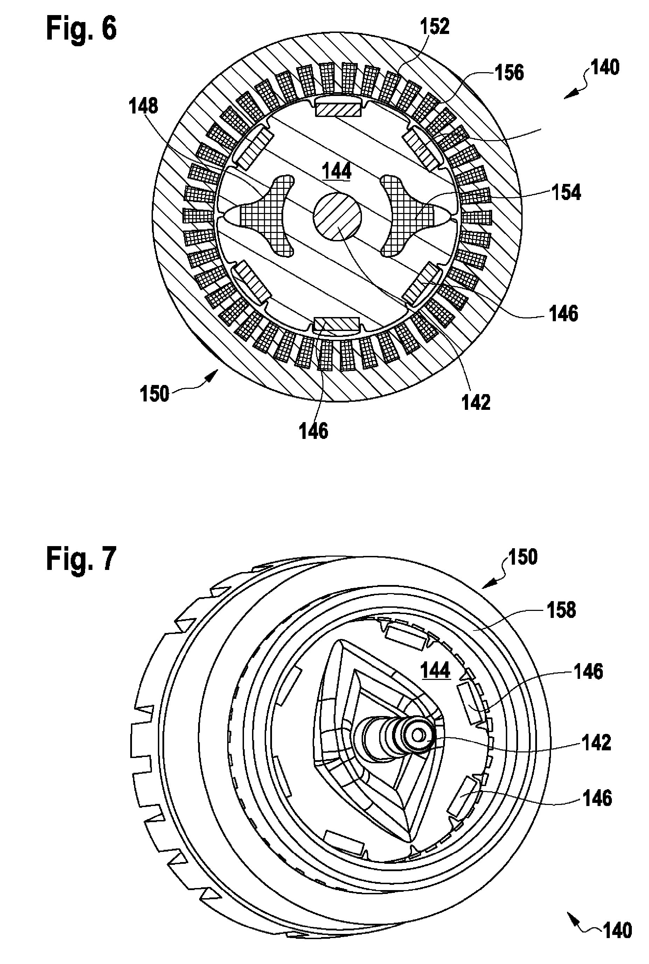

In Figur 6 ist eine weitere Ausführungsform einer polumschaltbaren Maschine 140 schematisch in Schnittdarstellung gezeigt. In Figur 7 ist dieselbe Maschine 140 von außen schematisch dargestellt. Diese Maschine 140 umfasst innen einen um eine Welle 142 drehbaren Rotor 144. Der Rotor 144 weist insgesamt sechs Permanentmagnete 146 und zwei Rotornuten 148 auf. Koaxial zu dem Rotor 144 ist außerhalb dieses Rotors 144 ein Stator 150 bzw. Ständer angeordnet, innerhalb dem mehrere Statornuten 152 angeordnet sind.

Es ist hier vorgesehen, dass Erregerwicklungen 154 innerhalb der beiden Rotornuten 148 angeordnet sind. Die sechs Permanentmagnete 146 sind in Taschen des Rotors 144 eingeschoben. In den radialen Nuten 152 des Stators 150 sind mehrphasige Ständer- bzw- Statorwicklungen 156 angeordnet.

Ein Magnetfeld, das von dem Rotor 144 bereitgestellt wird, entsteht durch Überlagerung eines ersten Magnetfelds, das durch die Permanentmagnete 146 bereitgestellt wird, und eines zweiten Magnetfelds, das durch die Erregerwicklungen 154 bereitgestellt wird, wobei eine Stärke des zweiten Magnetfelds von einem durch die Erregerwicklungen 154 fließenden Erregerstrom Iₑᵣᵣ abhängt. Bei Betrieb der Maschine 140 wird über das resultierende Magnetfeld in den Statorwicklungen 156 als Leiter der Maschine 140 eine Spannung induziert. Außerdem kann ein durch die Erregerwicklungen 154 fließender Erregerstrom von vierzehn Polen auf zwei Pole umgesteuert bzw. umgeschaltet werden. In dem hier dargestellten Beispiel liegt in den insgesamt 42 Ständernuten 152 eine dreiphasige Wicklung für vierzehn Pole vor. Dies ergibt eine Lochzahl von q =1, wobei die Lochzahl der Anzahl der Nuten pro Pol und Phase bzw. Wicklungsstrang entspricht. Die Statorwicklungen 156 weisen in axialer Richtung einen Wickelkopf 158 auf, in dem die Verbindungen zwischen den Leitern der einzelnen Statorwicklungen 156 angeordnet sind.

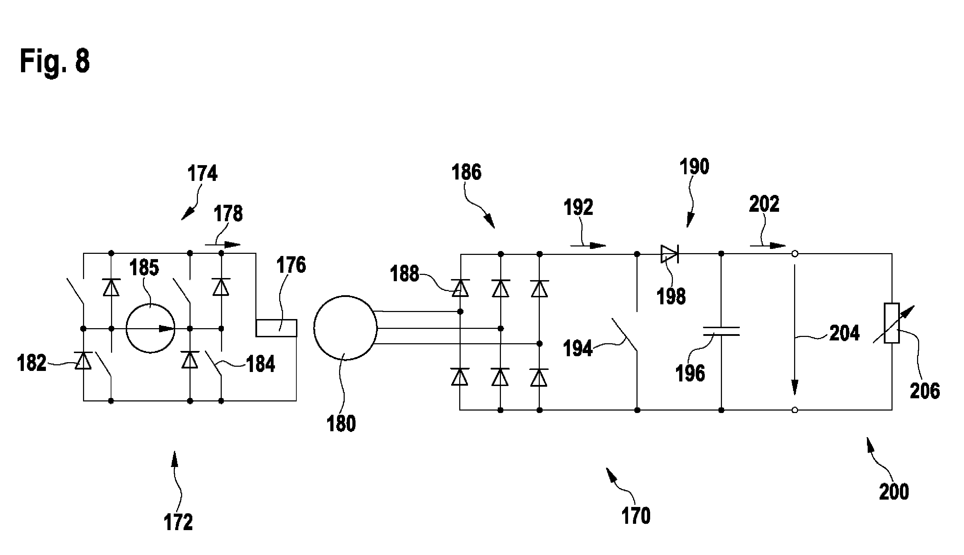

Ein sogenannter Hochsetzstellerbetrieb wird durch die Figuren 8 bis 10 beschrieben.

Die anhand von Figur 8 schematisch dargestellte Ausführungsform einer Anordnung 170 zum Betreiben einer als Generator ausgebildeten elektrischen Maschine zeigt als Komponenten dieser Maschine eine Erregerseite 172 mit einer Brückenschaltung 174, die dazu ausgebildet ist, Erregerwicklungen 176, einen Erregerstrom 178 Iₑᵣᵣ bereitzustellen, so dass diese eine Anzahl Elektromagnete bilden können. In der beschriebenen Ausführungsform sind die Erregerwicklungen 176 und Permanentmagnete in einem drehbaren Rotor der elektrischen Maschine angeordnet. Ein über den durch die Erregerwicklungen 176 fließenden Erregerstrom 178 Iₑᵣᵣ variabel einstellbares Magnetfeld sowie ein Magnetfeld, das von den hier nicht weiter gezeigten Permanentmagneten der Maschine bereitgestellt wird, erzeugen insgesamt ein erregendes Magnetfeld. Dieses erregende Magnetfeld ist dazu vorgesehen, in Statorwicklungen 180 als Leiter dieser Maschine, zu denen sich die Erregerwicklungen 176 und die Permanentmagnete drehen, eine Spannung zu induzieren.

Die Brückenschaltung 174 umfasst vier Dioden 182, wobei jeweils eine Diode 182 mit einem Schalter 184 in Reihe bzw. parallel geschaltet ist. Mit dieser Brückenschaltung 174 wird eine variabel einstellbare Erregerspannung Uₑᵣᵣ, die durch einen Pfeil 185 angedeutet ist, bereitgestellt.

Die Statorwicklungen 180 sind mit einem Gleichrichter 186 als erste Komponente einer elektronischen Schaltungsanordnung verbunden, die in diesem Fall sechs Dioden 188 umfasst und folglich auch als Diodenbrücke bezeichnet werden kann. Von dem Gleichrichter 186 wird einem Hochsetzsteller 190 als zweite Komponente der elektronischen Schaltungsanordnung ein Strom 192 I_{z} bereitgestellt. Der Hochsetzsteller 190 umfasst einen Schalter 194, der parallel zu einem Kondensator 196 geschaltet ist. Zwischen dem Schalter 194 und dem Kondensator 196 weist der Hochsetzsteller 190 eine Diode 198 auf. Weiterhin ist der Hochsetzsteller mit einem Bordnetz 200 eines Fahrzeugs verbunden. Dem Bordnetz 200 wird ausgehend von dem Hochsetzsteller 190 ein Netzstrom 202 I_{Netz} bereitgestellt. Insgesamt weist das Bordnetz 200 eine Netzspannung 204 U_{Netz} auf. Von diesem Bordnetz 200 ist stellvertretend ein Verbraucher 206 und somit eine Last dargestellt.

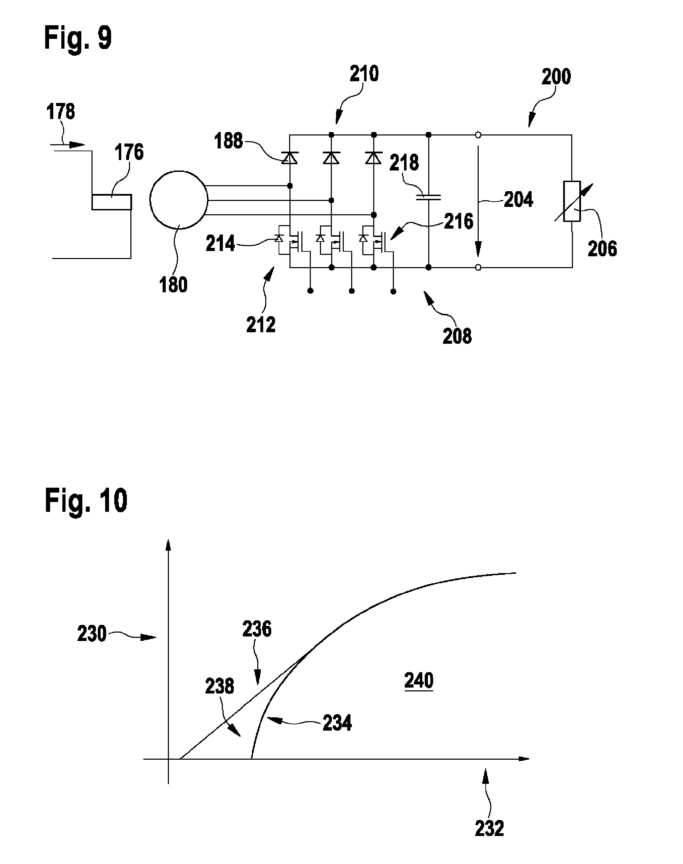

Die anhand der Figur 9 schematisch dargestellte zweite Ausführungsform einer Anordnung 200 zum Betreiben einer als Generator ausgebildeten elektrischen Maschine umfasst Statorwicklungen 180 als Leiter dieser Maschine, in denen über Erregerwicklungen 176, durch die ein Erregerstrom Iₑᵣᵣ fließt, und über hier nicht gezeigte Permanentmagnete, die sich relativ zu den Statorwicklungen 180 drehen, ein Strom induziert wird. Die Statorwicklungen 180 sind mit einer Schaltungsanordnung 210 verbunden, die dazu ausgebildet ist, zugleich die Funktion eines Gleichrichters sowie eines Hochsetzstellers bereitzustellen. Hierzu umfasst die Schaltungsanordnung 210 drei Dioden 188 sowie drei Schalter 212. Jeder Schalter 210 weist hierbei eine Diode 214, die als Rückwärtsdiode ausgebildet ist, sowie ein Halbleiter-Schaltelement 216 auf, bei dem es sich um einen Feldeffekttransistor handelt. Weiterhin umfasst die elektronische Schaltungsanordnung 210 einen Kondensator 218.

Über die elektronische Schaltungsanordnung 210 sind die Statorwicklungen 180 der elektrischen Maschine mit einem Bordnetz 200, an dem eine Netzspannung 204 U_{Netz} anliegt, verbunden. Auch hier ist ein Verbraucher 206 des Bordnetzes 200 schematisch dargestellt.

Das in Figur 10 gezeigte Diagramm umfasst eine vertikal orientierte Achse 230, entlang der eine Leistung P einer elektrischen Maschine über einer Drehzahl n der Maschine entlang einer horizontal orientierten Achse 232 aufgetragen ist. Innerhalb des Diagramms aus Figur 10 ist eine erste Kurve 234 dargestellt, die einen Betrieb der Maschine über eine Diodenbrücke begrenzt. Eine zweite Kurve 236 begrenzt eine Leistungsgrenze der elektrischen Maschine in einem Umrichterbetrieb. Ein von den beiden Kurven 234, 236 und der horizontal orientierten Achse 232 begrenzter erster Bereich 238 deutet einen Hochsetzstellerbetrieb an, bei dem vorgesehen ist, dass ein Erregerstrom Iₑᵣᵣsein Maximum erreicht. Ein zweiter Bereich 240, der durch die erste Kurve 234 und die horizontal orientierte Achse 232 begrenzt ist, steht für einen natürlichen Betriebsbereich, wobei eine Kontrolle und somit Regelung und/oder Steuerung eines Betriebs der elektrischen Maschine über eine Regelung des Erregerstroms Iₑᵣᵣ erfolgt, wenn dieser Erregerstrom Iₑᵣᵣ unterhalb seines Maximalwerts ist.

Ein Leistungsteil der in Figur 8 gezeigten Anordnung 170 umfasst im wesentlichen den Generator, der auf seiner Erregerseite 172 über die vollgesteuerte Brückenschaltung 174 gespeist wird, um auch negative Erregerströme 178 zu ermöglichen. Die Brückenschaltung 174 ermöglicht dabei eine günstige Dimensionierung der Regelung, da für den Anstieg und den Abfall des Erregerstroms Iₑᵣᵣ 178 dieselben Verhältnisse gelten.

Eine Ausgangsseite der Statorwicklungen 180 des Generators speist über den als Brückengleichrichter ausgebildeten Gleichrichter 186 Energie in einen Zwischenkreis, der über den Hochsetzsteller 190 mit dem Bordnetz 200 verbunden ist. Der Hochsetzsteller 190 umfasst hier keine eigene Speicherdrossel sondern verwendet hierzu die Stranginduktivität der Statorwicklungen 180 des Generators, somit kommt der Hochsetzsteller 190 mit einem Minimum an Bauteilen aus.

Bei dem sogenannten natürlichen Betrieb (zweiter Bereich 240 aus Figur 10) ist vorgesehen, dass eine direkte Speisung des Bordnetzes 200 über den als Diodenbrücke ausgebildeten Gleichrichter 186 erfolgt. Dabei ist der Hochsetzsteller 190 außer Betrieb. Die Klemmenspannung des Generators, die auch als Strangspannung bezeichnet wird, steht in einem festen Verhältnis zur Netzspannung 204 des gespeisten Bordnetzes 200, bei der es sich um eine Gleichspannung handelt.

Der Hochsetzsteller 190 ermöglicht auch bei Drehzahlen eine Leistungsabgabe, bei denen die Spannung des Generators in der Regel noch nicht ausreicht, um direkt in das Bordnetz 200 eingespeist zu werden. Mit dem Hochsetzsteller 190 kann die Generatorspannung, d. h. die Spannung nach dem Gleichrichter 186 bzw. der Diodenbrücke und somit eine Zwischenkreisspannung zwischen 0 Volt und der Netzspannung 204 des Bordnetzes 200 variabel eingestellt werden. Somit ist es möglich, im unteren Drehzahlbereich die elektrische Maschine im sogenannten Tangentenpunkt zu betreiben und die maximale Leistung der Maschine abzunehmen (zweite Kurve 236 aus Figur 10). Diese maximale Leistung oder Tangentenleistung, die sich bei einem Betrieb mit vorgegebenem Leistungsfaktor ergibt, wobei die Diodenbrücke einen Leistungsfaktor cos(ϕ) von ungefähr 1 erzwingt, ist bei der beschriebenen Maschine eine von der Drehzahl n abhängige Funktion.

Bei Drehzahlen n oberhalb des natürlichen Tangentenpunkts, bei dem eine Zwischenkreisspannung der Netzspannung 204 entspricht, kann der Hochsetzsteller 190 nicht mehr zur Leistungssteigerung verwendet werden. Die Maschine wird in diesem Fall, wie heute bereits üblich, über den Erregerstrom 178 Iₑᵣᵣ in ihrer Abgabeleistung geregelt. Das bedeutet, dass in diesem Bereich dieselbe Regelstrategie wie bei üblichen Generatoren gilt. Der Hochsetzsteller 190 ermöglicht zudem einen Schutz gegen Überspannungen. Durch Schließen des Schalters 194 bei Überspannungen im Bordnetz 200 kann die Leistungsabgabe des Generators an das Bordnetz 200 unterbunden werden. Somit lassen sich die Überspannungen sowie die Dauer der Überspannungen nach einem Lastabwurf erheblich reduzieren.

Der Hochsetzsteller 190 kann in einer Variante mit dem Gleichrichter 186 zusammengefasst werden. Hierdurch ist es möglich, Bauelemente und Verluste einzusparen, da der Strom nur eine Diodendurchlassspannung überwinden muss. Eine Ausgangsspannung des Hochsetzstellers 190 und somit der elektrischen Maschine wird über den Erregerstrom 178, den Gleichrichter 186 und den Hochsetzsteller 190 geregelt und folglich variabel eingestellt. Üblicherweise wird die Ausgangsspannung einer geforderten Netzspannung 204 U_{Netz}, bei der es sich um eine Gleichspannung handeln kann, angepasst.

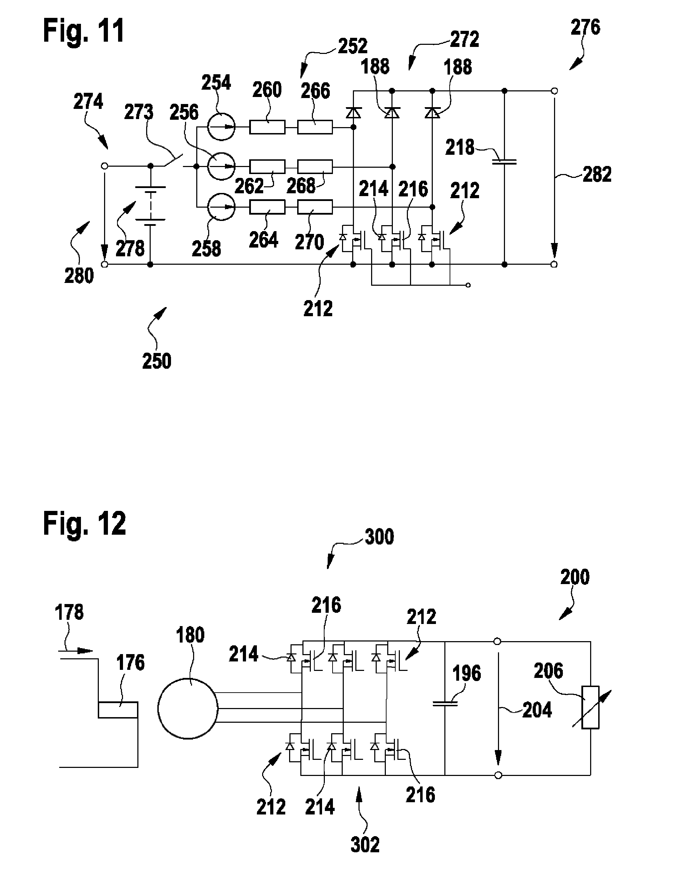

Figur 11 zeigt in schematischer Darstellung eine vierte Ausführungsform einer Anordnung 250, die zum Betreiben einer elektrischen Maschine ausgebildet ist. Hierbei ist die elektrische Maschine als Generator 252 ausgebildet, der in einer sogenannten Sternschaltung aufgebaut ist. Für diesen Generator 252 sind schematisch Dreiphasenspannungen 254 U_{P1}, 256 U_{P2}, 258 U_{P3} angedeutet. Außerdem umfasst der Generator 252 als Leiter eine erste Strangwicklung mit einer ersten Stranginduktivität 260 X₁, einer zweiten Stranginduktivität 262 X₂ und einer dritten Stranginduktivität 264 X₃. Außerdem sind Widerstände 266 R₁, 268 R₂ und 270 R₃ dargestellt. Der Generator 252 ist weiterhin mit einer elektronischen Schaltungsanordnung 272 verbunden, die dazu ausgebildet ist, zugleich die Funktion eines Gleichrichters sowie eines Hochsetzstellers auszuführen. Diese Schaltungsanordnung 272 umfasst analog wie die anhand von Figur 9 bereits vorgestellte Schaltungsanordnung 210 drei Dioden 188, wobei jeweils eine Diode 188 mit einem Schalter 212 in Reihe geschaltet ist. Weiterhin umfasst die Schaltungsanordnung 272 aus Figur 11 auch einen Kondensator 218. Bei der hier vorgestellten Anordnung 250 ist vorgesehen, dass der Generator 252 und die Schaltungsanordnung 272 zwischen einem ersten Bordnetz 274 und einem zweiten Bordnetz 276 geschaltet sind, wobei der Generator 252 über einen Schalter 273 mit dem ersten Bordnetz 274 verbunden ist. Dabei umfasst das erste Bordnetz 274 eine Batterienanordnung 278. Dieses erste Bordnetz 274 weist eine erste Netzspannung 280 U_{B1} auf. Das zweite Bordnetz 276 weist eine im Vergleich hierzu größere, zweite Netzspannung 282 U_{B2} auf.

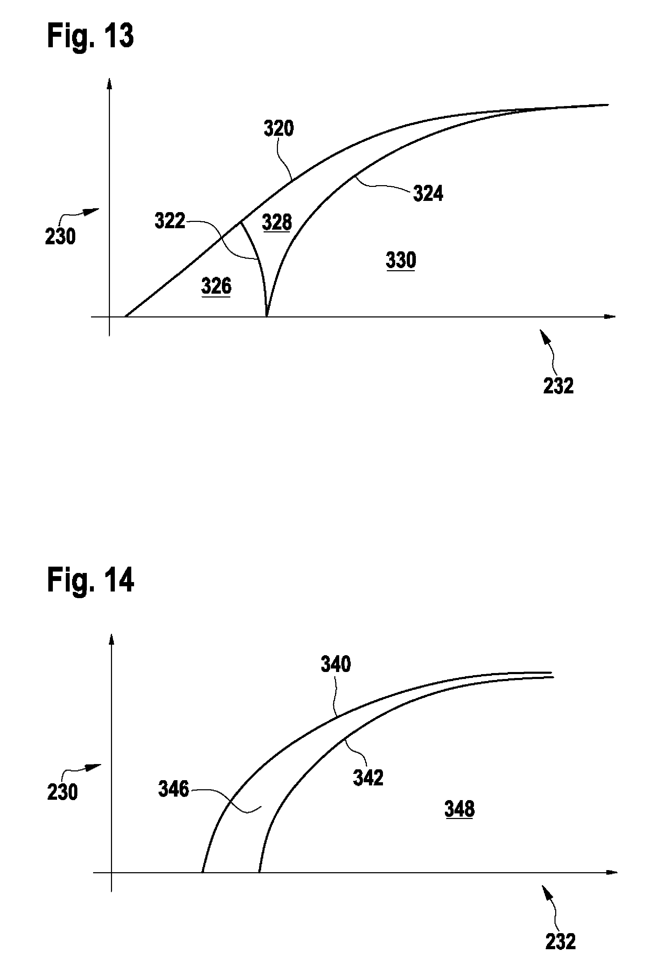

Eine Funktion einer elektrischen Maschine, die als hybriderregter Generator an einem getakteten Vollumrichter ausgebildet ist, ist anhand der Figuren 12 und 13 verdeutlicht.

Eine vierte Ausführungsform einer Anordnung 300 zum Betreiben einer elektrischen Maschine ist in Figur 12 schematisch dargestellt. In diesem Fall sind von einer als hybriderregtem Generator ausgebildeten elektrischen Maschine Erregerwicklungen 176, die neben nicht gezeigten Permanentmagneten an einem Rotor angeordnet sind, und Statorwicklungen 180 als Leiter dieser Maschine dargestellt. Die Statorwicklungen 180 sind mit Gleichrichterbrücken 212 einer als Umrichterbrücke ausgebildeten Schaltungsanordnung 302 verbunden, die weiterhin einen Kondensator 196 umfasst. Die Schaltungsanordnung 302 ist mit einem Bordnetz 200 verbunden, an dem eine Netzspannung 204 U_{Netz} anliegt. Da die Schaltungsanordnung 302 sechs Schalter 212 umfasst, kann sie auch als sogenannte B6-Brücke bezeichnet werden.

Bei Betrieb der vorgestellten Anordnungen 170, 200, 300 dreht sich die Erregerwicklung 176 relativ zu der Statorwicklung 180. Durch den Erregerstrom 178 Iₑᵣᵣ, der durch die Erregerwicklung 176 fließt, sowie durch Permanentmagnete, wird ein Magnetfeld erzeugt. Durch dieses sich drehende Magnetfeld werden in der Statorwicklung 180 ein Längsstrom I_{d} und ein Querstrom I_{q} induziert.

In dem in Figur 13 dargestellten Diagramm ist eine vertikal orientierte Achse 230 für eine Leistung über einer horizontal orientierten Achse 232 für eine Drehzahl n einer elektrischen Maschine dargestellt. In dem Diagramm sind eine erste Kurve 320 für eine Leistungsgrenze der elektrischen Maschine, eine zweite Kurve 322 für eine Spannungsgrenze der elektrischen Maschine sowie eine dritte Kurve 324 eingetragen, wobei die dritte Kurve 324 einen Betrieb der Maschine über eine Diodenbrücke begrenzt, wobei vorgesehen ist, dass der Leistungsfaktor cos(ϕ) = 1 ist. Weiterhin zeigt das Diagramm aus Figur 13 einen ersten Bereich 326, der von der ersten Kurve 320, der zweiten Kurve 322 sowie der horizontal orientierten Achse 232 begrenzt ist. Ein zweiter Bereich 328 ist von der ersten, zweiten und dritten Kurve 320, 322, 324 begrenzt. Ein dritter Bereich 330 für einen sogenannten Diodenbetrieb der elektrischen Maschine ist von der dritten Kurve 324 und der horizontal orientierten Achse 232 begrenzt. Hierbei gilt für den ersten Bereich 326, dass ein Erregerstrom 178 Iₑᵣᵣ, der durch die Erregerwicklung 176 fließt, maximal und ein durch die Statorwicklung 180 fließender Längsstrom I_{d} = 0 ist. Eine Regelung der elektrischen Maschine erfolgt dann über den Querstrom I_{q}.

Im zweiten Bereich 328 ist der Erregerstrom 178 Iₑᵣᵣ ebenfalls maximal. Außerdem entspricht in diesem Fall eine Ausgangsspannung der elektrischen Maschine einer Deckenspannung der als Umrichter ausgebildeten Schaltungsanordnung 302 und ist maximal. Es ist vorgesehen, dass die Regelung der elektrischen Maschine durch den Längsstrom I_{d} und den Querstrom I_{q} erfolgt.

Bei Betrieb der elektrischen Maschine im dritten Bereich 330 ist deren Ausgangsspannung, typischerweise die Ausgangsspannung des Umrichters, maximal, außerdem ist ein Leistungsfaktor cos(ϕ) annähernd 1. Die Regelung der elektrischen Maschine wird dann mit dem Erregerstrom 178 Iₑᵣᵣ durchgeführt.

In dem in Figur 14 gezeigten Diagramm ist ebenfalls eine Leistung einer elektrischen Maschine über der Drehzahl aufgetragen. Dabei begrenzt eine erste Kurve 340 eine Leistungsgrenze der elektrischen Maschine. Eine zweite Kurve 342 steht für die Bedingung, dass ein Erregerstrom Iₑᵣᵣ in der elektrischen Maschine sein Maximum erreicht. Durch diese beiden genannten Kurven 340, 342 sowie durch die horizontal orientierte Achse 232 ist ein erster Bereich 346 begrenzt, für den der Leistungsfaktor cos(ϕ) kleiner 1 ist. Ein zweiter Bereich 348 ist durch die zweite Kurve 342 und die horizontal orientierte Achse 232 begrenzt. Für diesen zweiten Bereich 348 ist ein Diodenbetrieb vorgesehen, wobei der Leistungsfaktor cos(ϕ) annähernd den Wert 1 erreicht.

In Kraftfahrzeugen werden üblicherweise Klauenpolgeneratoren als elektrische Maschinen mit nachgeschalteten, als B6-Gleichrichterbrücke ausgebildeten Schaltungsanordnungen verwendet. Die Leistung dieser Generatoren kann gesteigert werden, indem ein Pulsweitenmodulations- bzw. PWM-Umrichter als erste Komponente einer elektronischen Schaltungsanordnung verwendet wird. Durch den PWM-Umrichter können die Generatoren auch motorisch betrieben werden, so dass sich Anwendungsmöglichkeiten für einen Startvorgang, eine Getriebesynchronisation, Parkhilfen usw. bieten.

Ein Antrieb mit einer hier vorgeschlagenen Klauenpolmaschine und/oder hybriderregten elektrischen Maschine kann nach demselben Verfahren wie bei einer permanenterregten Synchronmaschine aufgebaut werden. Der Aufbau des PWM-Umrichters ist hierbei identisch. Die Reglerstruktur bietet eine weitere Eingriffsmöglichkeit der Maschine über den Erregerstrom Iₑᵣᵣ. Somit kann u. a. durch eine Gegendurchflutung im Ständer bzw. Stator, hier in der Längsachse, ein Feldschwächbereich realisiert werden. Ein echter Feldschwächbetrieb kann über den Erregerstrom Iₑᵣᵣ (Feldstrom) in der Erregerwicklung 176 des Rotors bzw. eines Polrads reduziert werden.

Für die als Generator ausgebildete elektrische Maschine können verschiedene Regelbereiche vorgesehen sein.

Wird der Generator an einem Pulswechselrichter als elektronische Schaltungsanordnung betrieben, kann in der Regel über den gesamten Drehzahl- und Leistungsbereich des Generators eine geeignete Regelung erreicht werden. Bei Kfz-Generatoren sind die Anforderungen an die Dynamik des Drehmomentes nicht sehr hoch, allerdings darf das Drehmoment nicht zu rasch anwachsen, da sonst ein leistungsstarker Generator den Verbrennungsmotor abwürgen kann. Bei Generatoren ist für alle Betriebspunkte die Forderung nach einem optimalen Wirkungsgrad zu erfüllen. Prinzipiell gibt es noch zwei weitere Bereiche für die Regelung, die für Kfz-Generatoren jedoch vernachlässigt werden können.

Für einen elektrisch erregten Generator kann in der Regel zwischen drei Bereichen in der Regelung unterschieden werden, die nachfolgend genauer beschrieben werden. Für die Regelung ist vorgesehen, einen Übergang zwischen zwei Regelbereichen richtig zu erkennen und das Umschalten zwischen den Regelbereichen geeignet zu realisieren. Diese drei zur Regelung vorgesehenen Bereiche 326, 328, 330 sind in dem Diagramm aus Figur 13 exemplarisch gezeigt.

Der erste Bereich 326 betrifft eine feldorientierte Regelung. Hier erreicht die Klemmenspannung der Maschine bzw. die Ausgangsspannung der Schaltungsanordnung 302 noch nicht die Deckenspannung bzw. eine maximal mögliche Ausgangsspannung der als Umrichter ausgebildeten Schaltungsanordnung 302. Der maximale Wirkungsgrad der Maschine wird erreicht, wenn in den Statorwicklungen 180 des Stators bzw. Ständers bei konstanter Leistungsabgabe ein minimaler Strom fließt. Wenn eine magnetische Einachsigkeit zunächst vernachlässigt wird, ist dies der Fall, wenn in den Statorwicklungen 180 ein reiner Querstrom I_{q} fließt und der Längsstrom I_{d} zu Null wird. Für Maschinen, die eine magnetische Achsigkeit und Reluktanzverhalten aufweisen, weicht der ideale Winkel von dem obigen Wert ab.

Der Erregerstrom 178 Iₑᵣᵣ wird bei der feldorientierten Regelung auf einen maximalen Wert eingestellt. Damit wird erreicht, dass für eine geforderte Leistung für den in der Statorwicklung 180 fließenden Strom ein Minimum erforderlich ist. Die Verluste in der Statorwicklung 180 überschreiten bei weitem die Erregerverluste außer bei sehr kleinen Leistungen und Statorströmen. Daher ist es günstig, den Erregerstrom 178 Iₑᵣᵣ auf den Maximalwert zu erhöhen und den Statorstrom, typischerweise den Längsstrom I_{d}, zu minimieren, um den Wirkungsgrad zu optimieren. Das maximale Moment ist durch den maximalen Statorstrom begrenzt, die Leistung nimmt linear mit der Drehzahl zu.

Weiterhin wird der Umrichter bzw. die Schaltungsanordnung 302 hierbei bei der feldorientierten Regelung mit einem hochfrequenten Signal getaktet, um die Ausgangs- bzw. Klemmenspannung an der Maschine frei einstellen zu können. Dies wird typischerweise durch eine Puls-Weiten-Modulation bei einem getakteten Umrichter als elektronische Schaltungsanordnung realisiert.

Ein zweiter Bereich 328 wird als Feldschwächbereich bezeichnet. Dieser wird erreicht, wenn die Spannung der Maschine die Deckenspannung des Umrichters erreicht hat. Der Umrichter kann die Spannung in diesem Fall nicht weiter steigern. Der Feldschwächbereich wird durch einen Längsstrom I_{q} in der Maschine realisiert. Der Erregerstrom 178 Iₑᵣᵣ bleibt dabei auf seinem maximalen Wert, um einen minimalen Statorstrom und demnach einen maximalen Strom im Leiter der Maschine zu erreichen.

Ein dritter Bereich 330 betrifft den sogenannten Diodenbetrieb. Dieser tritt ein, wenn der Längsstrom in der Maschine einen Wert erreicht, bei dem der Leistungsfaktor cos(ϕ) der Maschine annähernd den Wert -1 erreicht hat. Unter dieser Bedingung ist eine Änderung der Regelstrukur günstig. Der Diodenbetrieb kann durchaus weiter zu höheren Drehzahlen hin fortgesetzt werden. Es wird jedoch ein besserer Wirkungsgrad erzielt, wenn der Erregerstrom Iₑᵣᵣ der Maschine reduziert wird.

Unter der Randbedingung, dass eine konstante Klemmenspannung an der Maschine vorliegt, erreicht der Wirkungsgrad ein Maximum, wenn der Leistungsfaktor cos (ϕ) den Wert 1 im Motorbetrieb oder -1 im Generatorbetrieb erreicht.

Strom und Spannung sind dann in Phase, so dass eine Phasenopposition gegeben ist. Falls die Netzspannung bzw. Dachspannung des Umrichters konstant ist, sind der Strangstrom durch die Ständerwicklung 180 und somit auch die Verluste am geringsten.

Dieser Betrieb entspricht dem üblichen Betrieb des Generators mit einer B6-Gleichrichter- bzw. B6-Diodenbrücke als Schaltungsanordnung 302. Die Regelung der Abgabeleistung erfolgt über den Erregerstrom 178 Iₑᵣᵣ. Die Randbedingung maximaler Klemmenspannung für einen Leistungsfaktor cos(ϕ) annähernd - 1 wird durch die B6-Gleichrichterbrücke erfüllt.

Bei einer Synchrongleichrichtung bzw. aktiven Gleichrichtung (Blockbetrieb) werden Generatoren in der Regel über eine passive Diodenbrücke, die eine Anzahl Dioden 118 aufweist, mit dem Gleichstrom- bzw. DC-Bordnetz 200 verbunden. Falls die Dioden 118 jedoch durch elektronische Schalter 212 ersetzt werden, lassen sich die Verluste deutlich reduzieren. Durchlassverluste der Dioden 214 innerhalb der Gleichrichterbrücken 212 können dadurch reduziert werden, indem während der Durchlasszeit einer Diode 214 ein als Feldeffekttransistor ausgebildetes Schaltelement 216 parallel durchgeschaltet wird, da Durchlassverluste eines Feldeffekttransistors (FET) zu Durchlassverlusten einer Diode 214 geringer sind. Durch Substitution von Dioden 214 durch FETs kann die entstehende Verlustleistung des Generators reduziert werden, wodurch eine Maschinenkühlung begünstigt und ein Wirkungsgrad des Generators verbessert wird.

Im Vergleich zu einem getakteten Umrichter sind die Pulsstöme am Ausgang eines ungetakteten Umrichters erheblich geringer und ähnlich groß wie Pulsströme einer passiven Diodenbrücke. Daher kann bei Betrieb mit einem aktiven Gleichrichter am Zwischenkreis eines Umrichters ein deutlich kleinerer Kondensator 196 verwendet oder auf diesen ganz verzichtet werden. Ein Generator mit aktivem Gleichrichter kann ebenfalls motorisch betrieben werden. Im beschriebenen Blockbetrieb sind die Belastungen des Bordnetzes 200 durch Strompulse im Vergleich zu einem getakteten Umrichter deutlich geringer. Somit kann auch im motorischen Betrieb der elektrischen Maschine ein kleiner oder ggf. gar kein Kondensator 196 für den Zwischenkreis eingesetzt werden.

Bei einem Phasenschieberbetrieb sind Generatoren in der Regel über eine B6-Brücke mit dem als Gleichspannungsnetz ausgebildeten Bordnetz 200 eines Kraftfahrzeugs oder PKWs verbunden. Die Leistungsabgabe des Generators tritt ein, sobald seine induzierte Spannung die Netzspannung 204 überschreitet, wobei die Leistungsabgabe über die Größe des Erregerstroms 178 Iₑᵣᵣ geregelt wird. Als Regelgröße wird hierzu die Netzspannung 204 bzw. Ausgangsspannung des Generators herangezogen. Falls die oben beschriebene hybriderregte Maschine als Generator für ein Kraftfahrzeug benutzt wird, wird ebenfalls die Netzspannung als Regelgröße verwendet.

Durch Absetzung einer Leerlaufdrehzahl des Motors des Kraftfahrzeugs kann der Stromverbrauch reduziert werden, was jedoch unmittelbare Folgen für den Generator hat. Der Generator soll auch bei einem Leerlauf des Motors das Bordnetz 200 ausreichend mit elektrischer Energie versorgen und ein rasches Nachladen der Batterie ermöglichen. Dies kann dadurch erreicht werden, dass der Generator einen wachsenden Energiebedarf des elektrischen Bordnetzes 200 bereits bei kleineren Drehzahlen liefert. Somit ist zum einen eine Leistungssteigerung des Generators und zum anderen eine Senkung der Angehdrehzahl erforderlich.

Durch die Verwendung von Schaltern 212, die als schaltbare Halbleiter innerhalb der in Figur 12 gezeigten Schaltungsanordnung 302 ausgebildet sein können, statt der bisher eingesetzten Dioden 188 in der Anordnung 170 aus Figur 8, wird die B6-Brücke zu einem Wechselrichter.

Durch Einsatz derartiger Schalter 212 können Klemmen des Generators unabhängig von den natürlichen Zündzeitpunkten der Diodenbrücke mit dem Pluspol oder dem Minuspol der Batterie verbunden werden. Auf die bereits oben beschriebene Betriebsart des Umrichters mit einer Pulsweitenmodulation, typischerweise bei einem getakteten Umrichter, kann auf diese hochfrequente Ansteuerung verzichtet werden. Der Umrichter wird mit einer Grundwellensteuerung (Blockbetrieb) betrieben. Somit ist die Klemmenspannung am Ausgang des Generators ihrem Betrag nach immer konstant und gleich der Netzspannung 204 des Bordnetzes 200 und kann in ihrer Lage zur induzierten Generatorspannung durch den Schaltwinkel verändert werden. Die Ansteuerung des Umrichters wird hierdurch erheblich vereinfacht und es entstehen geringere Schaltverluste, die sich in Abhängigkeit der Schalthäufigkeit und Schaltgeschwindigkeit ergeben.

Hier wird keine Pulsweitenmodulation oder Spannungstaktung im Wechselrichter und/oder Gleichrichter eingesetzt. Somit wird eine reine Grundwellentaktung (Blockbetrieb) realisiert, wobei die Klemmenspannung der elektrischen Maschine durch die Netzspannung 204 vorgegeben ist. Der Umrichter ist nicht an die Beschränkung eines PWM-Umrichters mit einer Spannung U₁ kleiner der Netzspannung 204 U_{Netz} gebunden, sondern arbeitet an der Grenze, für die U₁ = U_{Netz} gilt. Ist die erforderliche Leistung bei maximaler Erregung im Diodenbetrieb nicht mehr lieferbar, so kann über eine Drehung des Spannungszeigers die Spannung U₁ des PWM-Umrichters gegenüber dessen natürlicher Lage für den Leistungsfaktor cos(ϕ) = 1 die Abgabeleistung beeinflusst werden. Die Maschine wird dann mit einem Leistungsfaktor cos(ϕ) < 1 betrieben.

Durch diese Drehung des Spannungszeigers wird der elektrischen Maschine eine induktive Blindleistung durch einen zusätzlichen Magnetisierungsstrom zugeführt. Dies kann auch durch eine Ansteuerung mit 180°-Blöcken der einzelnen Ventile erreicht werden. Die Klemmenspannung kann bei einem solchen Umrichter nicht verändert werden und bleibt auf dem Maximalwert im Blockbetrieb. Dieser Betrieb ist bei großen Maschinen der Energieversorgung bekannt und wird dort als Phasenschieberbetrieb bezeichnet.

Der Leistungsfaktor ist in den beschriebenen Bereichen dann zu cos(ϕ) = 1 zu setzen, falls die Maschine nicht weit in der Sättigung betrieben wird und die Achsigkeit der Maschine nicht ausgeprägt ist. Unter Achsigkeit versteht man die Schwankung der Induktivität der Stators bzw. Ständers bei einer Drehung des Rotors. In diesem Fall entspricht eine Induktivität in Längsrichtung Ld der Induktivität des Stators der Induktivität in Querrichtung Lq. Ist eine der beiden Bedingungen nicht erfüllt, dann ist cos(ϕ) nicht exakt +1 bzw. -1 zu setzen sondern weicht davon etwas ab, so dass bspw. cos(ϕ) < 1 gilt.

## Patentansprüche

1. Anordnung zum Betreiben einer elektrischen Maschine (10, 11, 72, 74, 76), die an einem Energienetz angeschlossen ist, wobei die Maschine (10, 11, 72, 74, 76) zum Erzeugen eines Magnetfelds mindestens einen Permanentmagneten (34, 35) und mindestens eine Erregerwicklung (112, 272, 302), durch die ein Erregerstrom (178) zu leiten ist, aufweist, wobei durch das erzeugte Magnetfeld in mindestens einem Leiter der Maschine (10, 11, 72, 74, 76) eine Spannung induziert wird, wobei die Anordnung (170, 200, 250, 300) mindestens eine aktive elektronische Schaltungsanordnung (112, 154, 174) aufweist, die dazu ausgebildet ist, die induzierte Spannung zu regeln, falls der Erregerstrom (178) null und die induzierte Spannung größer als eine Netzspannung (204, 280, 282) des Energienetzes ist.

2. Anordnung nach Anspruch 1, bei der die mindestens eine aktive elektronische Schaltungsanordnung (210, 272, 302) mit dem mindestens einen Leiter verbunden ist.

3. Anordnung nach Anspruch 1 oder 2, bei der mindestens ein Magnet radial magnetisiert ist.

4. Anordnung nach einem der Ansprüche 1 bis 3, bei der die mindestens eine aktive elektronische Schaltungsanordnung (210, 272, 302) als aktiver Gleichrichter ausgebildet ist.

5. Anordnung nach einem der Ansprüche 1 bis 3, bei der die mindestens eine aktive elektronische Schaltungsanordnung (210, 272, 302) als aktiver Pulswechselrichter ausgebildet ist.

6. Anordnung nach einem der voranstehenden Ansprüche, bei der die mindestens eine Schaltungsanordnung (210, 272, 302) mit dem Energienetz verbunden ist.

7. Anordnung nach einem der voranstehenden Ansprüche, die für eine als Generator (252) ausgebildete elektrische Maschine (10, 11, 72, 74, 76) verwendet wird, die mit einem als Bordnetz (200, 274, 276) ausgebildeten Energienetz eines Fahrzeugs verbunden ist.

8. Verfahren zum Betreiben einer hybriderregten elektrischen Maschine (10, 11, 72, 74, 76), bei der ein Magnetfeld durch mindestens einen Permanentmagneten (34, 35) und mindestens eine Erregerwicklung (112, 154, 174), durch die ein Erregerstrom (178) geleitet wird, erzeugt und durch das erzeugte Magnetfeld in mindestens einem Leiter eine Spannung induziert wird, wobei die elektrische Maschine (10, 11, 72, 74, 76) an einem Energienetz angeschlossen ist, wobei zur Durchführung des Verfahrens für den Fall, dass der Erregerstrom (178) null ist und die induzierte Spannung größer als eine Netzspannung (204, 280, 282) des Energienetzes ist, die induzierte Spannung über mindestens eine aktive elektronische Schaltungsanordnung (210, 272, 302) geregelt wird.

9. Verfahren nach Anspruch 8, bei dem der mindestens eine Permanentmagnet (34, 35) und die mindestens eine Erregerwicklung (112, 154, 174) in einem Rotor (20, 144) der elektrischen Maschine (10, 11, 72, 74, 76) angeordnet sind und zu mindestens einem als Statorwicklung (18, 156, 180) ausgebildeten Leiter der elektrischen Maschine (10, 11, 72, 74, 76) gedreht werden.
